# EUROPEAN PATENT SPECIFICATION

(11) **EP 3 059 156 B1**
(45) Date of publication and mention of the grant of the patent: **01.04.2020**
(21) Application number: 15382071.7
(22) Date of filing: 23.02.2015
(51) Int. Cl.: B64C 1/10

(54) **Flat kinked rear pressure bulkhead**
Flaches geknicktes Heckdruckschott
Cloison de pressurisation arrière déformée plate

(43) Date of publication of application: 24.08.2016
(73) Proprietor: Airbus Operations, S.L., 28906 Getafe Madrid (ES)
(72) Inventor: Martino González, Esteban, 28906 Getafe (ES); Goya Abaurrea, Pablo, 28906 Getafe (ES); Folch Cortés, Diego, 28906 Getafe (ES); Liñares Mendoza, Sandra, 28906 Getafe (ES)
(74) Representative: Elzaburu S.L.P.

(56) References cited:
- EP-A1- 2 743 175
- FR-A1- 2 782 495
- FR-A1- 2 903 662
- FR-A1- 2 983 825
- US-A- 4 448 372

## Description

### FIELD OF THE INVENTION

This invention relates to the rear pressure bulkhead of commercial aircraft.

### BACKGROUND OF THE INVENTION

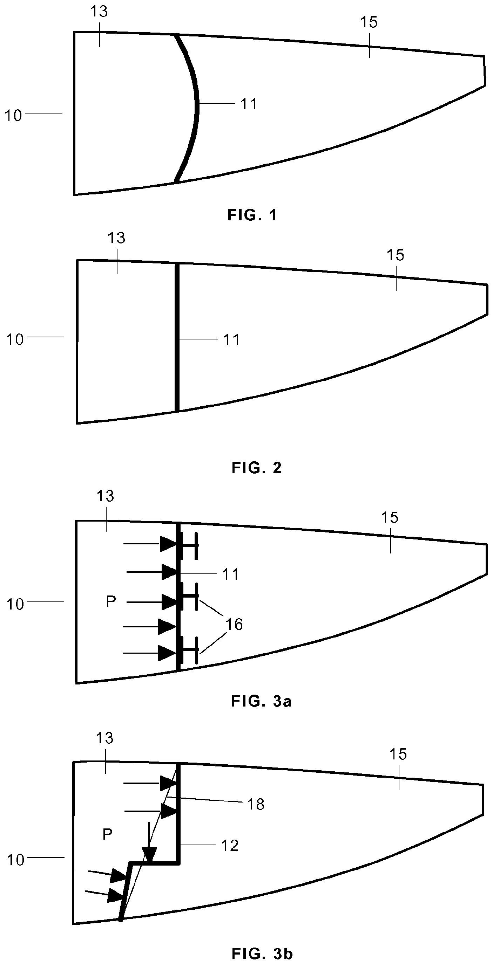

As shown in Figures 1 and 2 the rear pressure bulkhead 11 of a commercial aircraft is the structural component that separates a pressurized cabin 13 from an unpressurized rear section 15 and is therefore subjected to important loads.

Curved and flat rear pressure bulkheads 11 -see, respectively, Figures 1 and 2-made of metallic and/or composite materials are known in the art.

US 5,062,589 describes a rear pressure bulkhead of curved geometry made up with a monolithic composite panel of particular thickness and made of a fiber-mesh, a woven or a fleece-like reinforcement of a particular radius of curvature and preferably made of Kevlar; a possibly thicker edged portion of, preferably, carbon fiber-reinforced material, which possibly matches any taper of the fuselage, and a transition from the calotte shaped part to the edge having a radius of curvature smaller than the particular radius of the calotte shaped partition.

EP 2 098 448 A1 describes a rear pressure bulkhead of curved geometry made of a composite material, comprising three layers: an outer layer and an inner layer symmetrical with one another, which are made of a fiber laminate, and the intermediate layer or core made of a lightweight material. With such a sandwich-type shape, the resulting bulkhead is able to withstand the bending loads coming from the strain and pressurization of the fuselage without having to increase its stiffness by means of using some type of stiffener. The bulkhead comprises a ring that is attached to the ends of the sandwich shape. This ring is split into several parts to facilitate the assembly of the bulkhead made of composite material to the fuselage skin.

US 4,448,372 discloses all the technical features of the preamble of claim 1 and is therefore considered as the closest prior art.

While the primary objective of the rear pressure bulkhead is to resist the differential pressures between the pressurized cabin and the unpressurized rear section also play a role in separating the space allocated to both compartments and in that sense both the curved and the flat bulkhead prevents optimal use of space in both compartments.

### SUMMARY OF THE INVENTION

The invention provides an aircraft fuselage according to claim 1 with a rear pressure bulkhead separating
a pressurized cabin and an unpressurized rear end section that comprises flat portions forming one or more kinks between them, one of said kinks being contiguous to the rear border of the floor of the pressurized cabin. A flat kinked rear pressure bulkhead contributes to a space optimization of the aircraft due to an increase of the size of the unpressurized rear end section that allows additional space for location of systems that are not allowed in a pressurized area, is easier to manufacture and assemble than a curved rear pressure bulkhead and has a better bending inertia than a flat rear pressure bulkhead.

In a first embodiment the rear pressure bulkhead comprises upper and lower flat portions forming a kink contiguous to the rear border of the floor of the pressurized cabin. The upper flat portion is perpendicular to the longitudinal axis of the fuselage and the lower flat portion forms an angle □with the floor of the pressurized cabin comprised between 30-60°.

In a second embodiment the rear pressure bulkhead comprises upper, middle and lower flat portions forming a first kink between the upper and middle flat portions and a second kink between the middle and lower flat portions contiguous to the rear border of the floor of the pressurized cabin. The middle flat portion is disposed in the same plane than the floor of the pressurized cabin so that also serves as a floor of the upper part of the pressurized cabin. The upper flat portion is perpendicular to the longitudinal axis of the fuselage and the lower flat portion forms an angle □with the floor comprised between 30-60°.

The rear pressure bulkhead can be made with a metallic or composite material.

In an embodiment with composite material the rear pressure bulkhead comprises sandwich-type panels in the flat portions and monolithic panels in the kinks and the ends.

In another embodiment with composite material the rear pressure bulkhead is a monolithic panel with stiffening elements in its flat portions.

Other characteristics and advantages of the present invention will be clear from the following detailed description of embodiments illustrative of its object in relation to the attached figures.

### BRIEF DESCRIPTION OF THE DRAWINGS

Figures 1 and 2 are schematic side views of the rear part of aircraft fuselages with, respectively, flat and curved rear pressure bulkheads.
Figures 3a and 3b are schematic side views illustrating aircraft fuselages with, respectively, a flat rear pressure bulkhead known in the art and a flat kinked rear pressure bulkhead according to the invention.
Figures 4 and 5 are schematic side views illustrating two embodiments of aircraft fuselages with a flat kinked rear pressure bulkhead.
Figure 6 is a detailed view of the area of Figure 5 framed by a circle.
Figure 7 is a schematic side view illustrating an embodiment of a flat kinked rear pressure bulkhead made with sandwich-type composite panels in the flat portions and monolithic panels in kinks and ends.
Figure 8 is a schematic side view illustrating an embodiment of a flat kinked rear pressure bulkhead made with a monolithic panel with stiffening elements in its flat portions.

### DETAILED DESCRIPTION OF THE INVENTION

As noted in the Background in reference to Figures 1 and 2 a rear pressure bulkhead 11, flat or curved, is used to separate a pressurized cabin 13 from an unpressurized rear section 15 in aircraft fuselages 10 known in the art having a curved shape with a vertical symmetry plane and a central longitudinal axis.

The technical evolution of the rear pressure bulkhead 11 of aircraft fuselages has been oriented by two basic objectives: structural efficiency to support differential pressures at both sides and ease of manufacture. In that sense the basic alternatives considered have been a flat or curved geometry on the one hand and the use of metallic or composite material on the other hand. In general terms it can be said that from a structural point of view the curved bulkheads are more efficient than the flats but more difficult to manufacture.

Flat or curved pressure bulkheads (especially the curved) have the drawback that the space in the unpressurized rear section 15 delimited by them does not allow optimum use of the same to shelter systems housed therein which involves its oversizing and thus an increase in weight and drag.

The rear pressure bulkhead 12 proposed by the present invention is a bulkhead formed by flat portions with one or more kinks between them allowing on the one hand to be more effective structurally than a flat bulkhead 11 and, on the other hand, allocating to the unpressurized rear section 15 areas formerly allocated to the pressurized cabin 13 improving the overall distribution of spaces of the aircraft fuselage and thereby reducing the size of the unpressurized rear section 15 and, consequently, the aircraft weight.

This flexibility allows additional space in the unpressurized rear section 15 for location of systems that are not allowed in a pressurized area due to safety reasons. It also allows the use of non-critical systems housed in the unpressurized rear section 15 as additional shielding for blade impacts on aircraft with engines mounted on rear fuselage.

Comparing Figures 3a and 3b the greatest structural efficiency of a flat kinked rear pressure bulkhead 12 with respect to a typical prior art flat rear pressure bulkhead 11 with stiffening elements 16 in the side facing the unpressurized rear section 15 to support the differential pressure P can be appreciated. The flat kinked rear pressure bulkhead 12 has greater inertia than the flat rear pressure bulkhead 11 as their corners are separated from the neutral fiber 18 which makes unnecessary the stiffening elements 16.

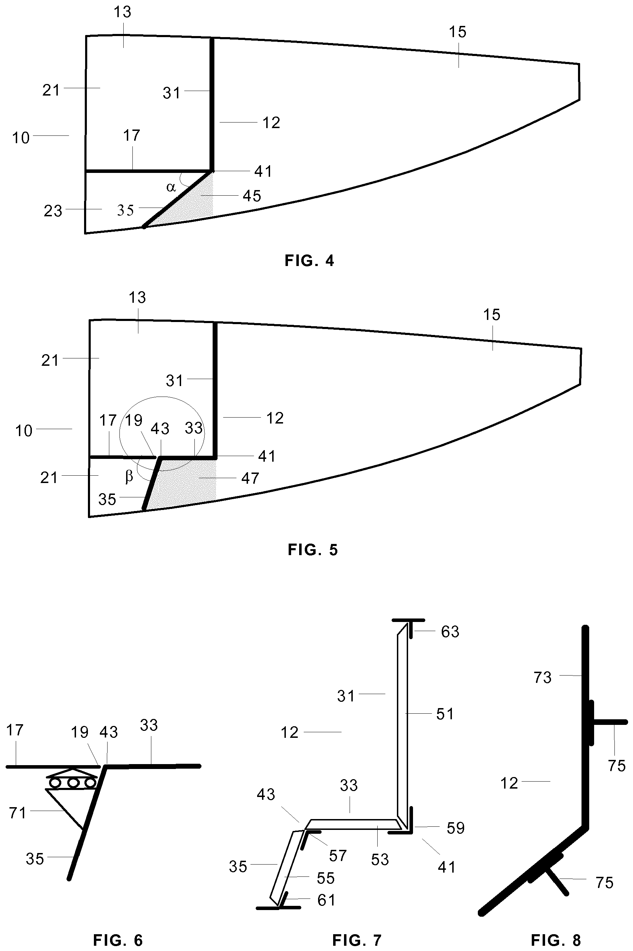

Figure 4 shows an embodiment of a rear pressure bulkhead 12 with two flat portions 31, 35 with a kink 41 between them adjacent to the end of the floor 17 of the pressurized cabin 13 which separates the upper and lower compartments 21, 23 intended for, typically, passengers and cargo, respectively. This arrangement allows allocating to the unpressurized rear section 15 the space 45 that would have belonged to the lower compartment 23 of the pressurized cabin 13 if the rear pressure bulkhead 12 did not have the kink 41. Preferably the angle □between the flat portion 35 and the floor 17 shall be comprised between 30-60°.

Figure 5 shows an embodiment of a rear pressure bulkhead 12 with three flat portions 31, 33, 35 with a first kink 41 between the flat portions 31 and 33 and a second kink 43 between the flat portions 33, 35 adjacent to the rear border 19 of the floor 17 of the pressurized cabin 13. This arrangement allows allocating to the unpressurized rear section 15 the space 47 that would have belonged to the lower compartment 23 of the pressurized cabin 13 if the rear pressure bulkhead 12 did not have the kinks 41 and 43. It should be noted that in this embodiment the portion 33 of the rear pressure bulkhead 12 is disposed at the same level than the floor 17 so it can be considered as a continuation of the same and bear the same function of supporting passenger seats. However, the rear pressure bulkhead 12 and the floor 17 of the pressurized cabin 13 are not connected together (they are subject to very different loads) but arranged such that a functional continuity between them is maintained even in case of displacements between the rear border 19 of the floor 17 and the second kink 43. In this regard, Figure 6 shows schematically a rolling device 71 provided in the lower flat portion 35 of the rear pressure bulkhead 12 to facilitate such a functional continuity. Preferably the angle □between the flat portion 35 and the floor 17 shall be comprised between 30-60°.

The rear pressure bulkhead 12 can be manufactured with metallic or composite materials.

In the last case, it can be a monolithic or sandwich structure although the preferred option is a mixed structure combining sandwich type panels in the flat portions and monolithic panels on the kinks and ends, such as those shown in Figure 7 that correspond to the rear pressure bulkhead shown in Figure 5: the rear pressure bulkhead 12 is formed by sandwich type panels 51, 53. 55 in the flat portions 31, 33, 35, by the monolithic panels 57, 59 in the kinks 41, 43 and by the monolithic panels 61, 63 in the ends, properly shaped to be joined to the skin of the aircraft fuselage 10. The more stressed areas (edges, kinks) are therefore built with a monolithic structure (more weight but less thickness required) while the interior areas are built with a sandwich structure (less weight but more thickness required). Due to this fact, a compromise solution is achieved, reducing thickness without much weight increase.

The rear pressure bulkhead 12 can also be as shown in Figure 8 a monolithic panel 73 with stiffening elements 75 in its flat portions (for a rear pressure bulkhead with two flat portions as that shown in Figure 4).

Although the present invention has been described in connection with various embodiments, it will be appreciated from the specification that various combinations of elements, variations or improvements therein may be made, and are within the scope of the invention as defined by the appended claims.

## Claims

1. Aircraft fuselage (10) having a curved shape with a vertical symmetry plane and a central longitudinal axis and comprising a pressurized cabin (13) and an unpressurized rear section (15) separated by a rear pressure bulkhead (12); the pressurized cabin (13) comprising a floor (17) dividing the space of the pressurized cabin (13) into upper and lower compartments (21, 23); the rear pressure bulkhead (12) comprises flat portions forming one or more kinks between them, **characterized in that** one of said kinks being contiguous to the rear border (19) of the floor (17), and wherein the rear pressure bulkhead (12) further comprises:
- upper and lower flat portions (31, 35) forming a kink (41) contiguous to the rear border (19) of the floor (17), the upper flat portion (31) being perpendicular to the central longitudinal axis, the lower flat portion (35) forming an angle *α* with the floor (17) comprised between 30-60º, or
- upper, middle and lower flat portions (31, 33, 35) forming a first kink (41) between the upper and middle flat portions (31, 33) and a second kink (43) between the middle and lower flat portions (33, 35) contiguous to the rear border (19) of the floor (17); the middle flat portion (33) being coplanar with the floor (17), the upper flat portion (31) being perpendicular to the central longitudinal axis, the lower flat portion (35) forming an angle *β* with the floor (17) comprised between 30-60º.

2. Aircraft fuselage (10) according to claim 1 wherein the rear pressure bulkhead (12) is made with a metallic material.

3. Aircraft fuselage (10) according to any of claims 1-2 wherein the rear pressure bulkhead (12) is made with composite.

4. Aircraft fuselage (10) according to claim 3 wherein the rear pressure bulkhead (12) comprises composite sandwich-type panels in the flat portions and composite monolithic panels in the kinks and ends.

5. Aircraft fuselage (10) according to claim 3 wherein the rear pressure bulkhead (12) is a composite monolithic panel (73) with stiffening elements (75) in its flat portions.

## Patentansprüche

1. Luftfahrzeugrumpf (10), aufweisend eine gewölbte Form mit einer vertikalen Symmetrieebene und einer zentralen Längsachse und umfassend eine druckbeaufschlagte Kabine (13) und einen nicht druckbeaufschlagten hinteren Abschnitt (15), getrennt durch ein Heckdruckschott (12); wobei die druckbeaufschlagte Kabine (13) einen Boden (17) umfasst, der den Raum der druckbeaufschlagten Kabine (13) in eine obere und untere Sektion (21, 23) teilt; wobei das Heckdruckschott (12) flache Abschnitte umfasst, die zwischen einander einen oder mehrere Knicke ausbilden, **dadurch gekennzeichnet, dass** einer der Knicke der hinteren Grenze (19) des Bodens (17) benachbart ist, und wobei das Heckdruckschott (12) ferner Folgendes umfasst:
- einen oberen und unteren flachen Abschnitt (31, 35), die einen Knick (41) ausbilden, welcher der hinteren Grenze (19) des Bodens (17) benachbart ist, wobei der obere flache Abschnitt (31) senkrecht zu der zentralen Längsachse ist, der untere flache Abschnitt (35) einen Winkel α mit dem Boden (17) ausbildet, umfassend zwischen 30-60°, oder
- einen oberen, mittleren und unteren flachen Abschnitt (31, 33, 35), ausbildend einen ersten Knick (41) zwischen dem oberen und mittleren flachen Abschnitt (31, 33), und einen zweiten Knick (43) zwischen dem mittleren und unteren flachen Abschnitt (33, 35), benachbart der hinteren Grenze (19) des Bodens (17); wobei der mittlere flache Abschnitt (33) koplanar mit dem Boden (17) ist, der obere flache Abschnitt (31) senkrecht zu der zentralen Längsachse ist, der untere flache Abschnitt (35) einen Winkel β mit dem Boden (17) ausbildet, umfassend zwischen 30-60°.

2. Luftfahrzeugrumpf (10) nach Anspruch 1, wobei das Heckdruckschott (12) mit einem metallischen Material hergestellt ist.

3. Luftfahrzeugrumpf (10) nach einem der Ansprüche 1-2, wobei das Heckdruckschott (12) mit Verbundmaterial hergestellt ist.

4. Luftfahrzeugrumpf (10) nach Anspruch 3, wobei das Heckdruckschott (12) sandwichartige Verbundpaneele in den flachen Abschnitten und monolithische Verbundpaneele in den Knicken und Enden umfasst.

5. Luftfahrzeugrumpf (10) nach Anspruch 3, wobei das Heckdruckschott (12) ein monolithisches Verbundpaneel (73) mit Versteifungselementen (75) in seinen flachen Abschnitten ist.

## Revendications

1. Fuselage d'avion (10) ayant une forme courbe avec un plan de symétrie vertical et un axe longitudinal central et comprenant une cabine pressurisée (13) et une partie arrière non pressurisée (15) séparées par une cloison de pressurisation arrière (12) ; la cabine pressurisée (13) comprenant un plancher (17) divisant l'espace de la cabine pressurisée (13) en compartiments supérieur et inférieur (21, 23) ; la cloison de pressurisation arrière (12) comprend des parties plates formant un ou plusieurs coudes entre elles, **caractérisé en ce que** l'un desdits coudes est contigu à la bordure arrière (19) du plancher (17), et la cloison de pressurisation arrière (12) comprenant en outre :
- des parties plates supérieure et inférieure (31, 35) formant un coude (41) contigu à la bordure arrière (19) du plancher (17), la partie plate supérieure (31) étant perpendiculaire à l'axe longitudinal central, la partie plate inférieure (35) formant un angle α avec le plancher (17) compris entre 30° et 60°, ou
- des parties plates supérieure, médiane et inférieure (31, 33, 35) formant un premier coude (41) entre les parties plates supérieure et médiane (31, 33) et un second coude (43) entre les parties plates médiane et inférieure (33, 35) contigu à la bordure arrière (19) du plancher (17) ; la partie plate médiane (33) étant coplanaire avec le plancher (17), la partie plate supérieure (31) étant perpendiculaire à l'axe longitudinal central, la partie plate inférieure (35) formant un angle β avec le plancher (17) compris entre 30° et 60°.

2. Fuselage d'avion (10) selon la revendication 1, dans lequel la cloison de pressurisation arrière (12) est fabriquée en un matériau métallique.

3. Fuselage d'avion (10) selon l'une des revendications 1 à 2, dans lequel la cloison de pressurisation arrière (12) est fabriquée en matériau composite.

4. Fuselage d'avion (10) selon la revendication 3, dans lequel la cloison de pressurisation arrière (12) comprend des panneaux composites de type sandwich dans les parties plates et des panneaux composites monolithiques dans les coudes et les extrémités.

5. Fuselage d'avion (10) selon la revendication 3, dans lequel la cloison de pressurisation arrière (12) est un panneau composite monolithique (73) avec des éléments de raidissement (75) dans ses parties plates.
